# EUROPÄISCHE PATENTANMELDUNG

(11) **EP 2 832 457 A1**
(43) Veröffentlichungstag der Anmeldung: **04.02.2015**
(21) Anmeldenummer: 14175356.6
(22) Anmeldetag: 02.07.2014
(51) Int. Cl.: B07B 4/04

(54) **Zick-Zack-Sichter zum Separieren von Trenngut, beispielsweise Kunststoffflocken, und Verfahren zum Separieren von Trenngut, beispielsweise Kunststoffflocken, mittels eines Zick-Zack-Sichters**

(30) Priorität: 31.07.2013 DE 102013215062
(71) Anmelder: Krones AG, 93073 Neutraubling (DE)
(72) Erfinder: Blanke, Jörg, 93073 Neutraubling (DE)
(74) Vertreter: Grünecker, Kinkeldey, Stockmair & Schwanhäusser

(57) **Zusammenfassung**

Einen Zick-Zack-Sichter (1) zum Separieren von Trenngut, beispielsweise Kunststoffflocken, der zwei zick-zack-förmige Bleche (2, 3) umfasst, die derart einander gegenüberliegend vertikal angeordnet sind, dass zwischen ihnen ein Kanal ausgebildet ist, wobei ein mittig zwischen den beiden zick-zack-förmigen Blechen (2, 3) vertikal angeordnetes zick-zack-förmiges Trennblech (4) derart angeordnet ist, dass der Kanal in zwei parallele Sichterkanäle (5, 6) mit im Wesentlichen gleicher Breite (25, 26) unterteilt wird. Dargestellt ist auch ein Verfahren zum Separieren von Trenngut, beispielsweise Kunststoffflocken, unter Verwendung eines erfindungsgemäßen Zick-Zack-Sichters (1).

## Beschreibung

Die Erfindung betrifft einen Zick-Zack-Sichter zum Separieren von Trenngut, beispielsweise Kunststoffflocken, gemäß des Oberbegriffs des Anspruchs 1 und ein Verfahren zum Separieren von Trenngut, beispielsweise Kunststoffflocken, mittels eines Zick-Zack-Sichters gemäß des Oberbegriffs des Anspruchs 13.

### Stand der Technik

Ein Zick-Zack-Sichter ist dazu ausgelegt, zugeführtes Trenngut im Sichter in eine Grob- und eine Feinfraktion zu separieren. Es hat sich gezeigt, dass für die Fläche des Sichtkanals folgendes Verhältnis anzustreben ist: Länge/Breite ≤ 4. Der Winkel der Zacken des Zick-Zack-Sichters liegt optimalerweise im Bereich von 120°.

Das Trenngut wird über eine zur Umgebung abgedichtete Zuführeinrichtung in den Zick-Zack-Sichter eingespeist und über den gesamten Sichterkanalquerschnitt verteilt. Die vom Gebläse erzeugte Sichtluft durchströmt den Sichter von unten nach oben, wobei das Trenngut durchblasen und separiert wird. Infolge des mehrfach abgewinkelten Sichterkanals wird das Trenngut in eine zick-zack-förmige Bewegung gezwungen. An jedem Knick des Sichterkanals muss das Trenngut den Luftstrom durchqueren und prallt danach auf die gegenüberliegende Sichterwand auf. Bei dem Wechsel von einer Kanalseite auf die andere werden die Bestandteile des Trennguts vorzugsweise quer von der Sichtluft angeströmt und somit unterschiedlich stark abgelenkt. Dabei sinken schwerere Bestandteile in Folge der Schwerkraft im Sichterkanal nach unten. Die leichteren Bestandteile werden mittels des nach oben gerichteten Luftstroms nach oben getragen.

Durch die mehrfache Richtungsänderung in dem Sichtkanal findet eine gute Abtrennung von leichten und schweren Bestandteilen statt. Die Maße des Sichtkanals wie auch die Sichtluftgeschwindigkeit und die Beladung mit Trenngut kann je nach Materialien und Leistung variieren. Im Sichtkanal wird durch den Abstand der Z-förmigen Bleche eine bestimmte Strömung erzeugt, wobei dieser Abstand des Sichtkanals für ein bestimmtes Material annährend konstant ist. Daher wird für größere Durchsatzleistungen der Sichtkanal in der Tiefe vergrößert, so dass die Materialein- und Ausschleusung durch Zellradschleusen immer schwieriger wird.

### Aufgabe der Erfindung

Der Erfindung liegt die Aufgabe zugrunde, einen Zick-Zack-Sichter zur Verfügung zu stellen, der auch bei größeren Durchsatzleistungen effektiv arbeitet und für Materialien mit unterschiedlichsten Mischungsverhältnissen von leichten und schweren Fraktionen, die separiert werden sollen, verwendbar ist.

### Lösung

Die Aufgabe wird erfindungsgemäß durch den Zick-Zack-Sichter zum Separieren von Trenngut gemäß Anspruch 1 und ein Verfahren zum Separieren von Trenngut mittels eines Zick-Zack-Sichters gemäß Anspruch 13 gelöst. Bevorzugte Ausführungsformen sind in den Unteransprüchen offenbart.

Unter dem Sichten versteht man das Separieren von für eine Verarbeitung geeigneten Anteilen - beispielsweise Kunststoffflocken mit einem gewissen Mindestgewicht - und von ungeeigneten Anteilen - beispielsweise Kunststoffflocken und/oder Fremdanteile mit einem Gewicht, das kleiner als das Mindestgewicht ist - eines Trennguts. Dieses Sichten erfolgt innerhalb von Sichterkanälen des Zick-Zack-Sichters. Dabei wird das über einen Zugang in den Zick-Zack-Sichter eingebrachte Trenngut mittels Sichtluft gesichtet, d.h. in die geeigneten und die ungeeigneten Anteile separiert.

Ein erfindungsgemäßer Zick-Zack-Sichter zum Separieren von Trenngut, beispielsweise Kunststoffflocken, umfasst zwei zick-zack-förmige Bleche, die derart einander gegenüberliegend vertikal angeordnet sind, dass zwischen ihnen ein Kanal ausgebildet ist, wobei ein mittig zwischen den beiden zick-zack-förmigen Blechen vertikal angeordnetes zick-zackförmiges Trennblech derart angeordnet ist, dass der Kanal in zwei parallele Sichterkanäle mit im Wesentlichen gleicher Breite unterteilt wird.

Durch das Vorhandensein zweier Sichterkanäle kann die Durchsatzleistung des Zick-Zack-Sichters im Vergleich zu einem Zick-Zack-Sichter mit nur einem Sichterkanal erhöht werden, ohne dass eine Vergrößerung der Länge des Zick-Zack-Sichters erforderlich wäre. Somit kann der erfindungsgemäße Zick-Zack-Sichter bei gleichen Außenabmessungen etwa eine doppelte Durchsatzleistung erbringen. Da die Länge des Zick-Zack-Sichters zudem nicht größer gewählt werden braucht, kann für die Zuführung des Trennguts eine Zellenradschleuse ohne Probleme verwendet werden.

Der Zick-Zack-Sichter kann weiter eine Verfahrvorrichtung umfassen, die dazu ausgelegt ist die beiden zick-zack-förmigen Bleche horizontal zu verfahren, so dass die Breite der zwei parallelen Kanäle veränderbar ist. Durch das Verfahren der beiden zick-zack-förmigen Bleche kann die Breite der beiden Sichterkanäle variabel an gegebene Parameter angepasst werden, beispielsweise an die Art des Trennguts, an die Beladung, an die Sichtluftzufuhr und/oder an eine gewünschte Trennschärfe usw.

Die Verfahrvorrichtung kann mittels einer Steuervorrichtung steuerbar ausgelegt sein, wobei die Steuerung vorzugsweise eine Art des Trennguts, eine Sichtluftzufuhr und/oder eine gewünschte Trennschärfe für eine Steuerung der Verfahrvorrichtung berücksichtigt. Somit ist es möglich automatisch mittels der Steuervorrichtung den Zick-Zack-Sichter an vorhandene Gegebenheiten anzupassen.

Der Zick-Zack-Sichter kann weiter zwei Zuführvorrichtungen umfassen, die dazu ausgelegt sind, dem Zick-Zack-Sichter Sichtluft zuzuführen, wobei die zwei Zuführvorrichtungen jeweils entlang der Länge des Zick-Zack-Sichters und seitlich versetzt unterhalb jeweils eines der beiden Sichterkanälen angeordnet sind.

Die zugeführte Sichtluft durchströmt die beiden Sichterkanäle von unten nach oben, wobei von oberhalb der beiden Sichterkanäle eingegebenes Trenngut - beispielsweise Kunststoffflocken - von der Sichtluft durchströmt wird. Infolge der mehrfachen Abwinkelung durch die zick-zack-förmigen Bleche und das zick-zack-förmige Trennblech wird das Trenngut in eine zick-zack-förmige Bewegung innerhalb der Sichterkanäle gezwungen. An jedem Knick der Sichterkanäle muss das Trenngut den Sichtluftstrom durchqueren und prallt danach auf die gegenüberliegende Sichterwand auf. Bei dem Wechsel von einer Sichterkanalwandseite auf die andere werden die Bestandteile des Trennguts von der Sichtluft angeströmt und unterschiedlich stark abgelenkt. Dabei sinken schwerere Bestandteile - die sogenannte Sichterschwerfraktion - in Folge der Schwerkraft in den Sichterkanälen nach unten. Die leichteren Bestandteile - die sogenannte Sichterleichtfraktion - werden mittels des nach oben gerichteten Sichtluftstroms nach oben getragen.

Die zwei Zuführvorrichtungen können jeweils einen sich verjüngenden Querschnitt entlang der Länge des Zick-Zack-Sichters aufweisen. Der Querschnitt kann in einem Anfangsbereich der Zuführvorrichtung größer sein als der Querschnitt in einem Endbereich der Zuführvorrichtung. Als Anfangsbereich kann hierbei der Bereich angesehen werden, in den die Sichtluft in die Zuführvorrichtungen von außerhalb eingebracht wird. Die eingebrachte Sichtluft bewegt sich von dem Anfangsbereich zu dem jeweiligen Endbereich, wobei der Endbereich die Zuführvorrichtung luftdicht abschließt.

Die zwei Zuführvorrichtungen können konisch ausgeführt sein. Der Durchmesser kann in einem Anfangsbereich der Zuführvorrichtung größer sein als der Durchmesser in einem Endbereich der Zuführvorrichtung. Als Anfangsbereich kann hierbei der Bereich angesehen werden, in den die Sichtluft in die Zuführvorrichtungen von außerhalb eingebracht wird. Die eingebrachte Sichtluft bewegt sich von dem Anfangsbereich zu dem jeweiligen Endbereich einer Zuführvorrichtung, wobei der Endbereich die Zuführvorrichtung luftdicht abschließt.

Der Zick-Zack-Sichter kann zwei Absaugvorrichtungen umfassen, die dazu ausgelegt sind, einen Teil Sichtluft und eine Leichteilfraktion aus dem Zick-Zack-Sichter abzusaugen, wobei die zwei Absaugvorrichtungen jeweils entlang der Länge des Zick-Zack-Sichters und seitlich versetzt oberhalb jeweils eines der beiden Sichterkanälen angeordnet sind.

Die zwei Absaugvorrichtungen können jeweils einen sich verjüngenden Querschnitt entlang der Länge des Zick-Zack-Sichters aufweisen. Der Querschnitt kann in einem Anfangsbereich der Absaugvorrichtung größer sein als der Querschnitt in einem Endbereich der Absaugvorrichtung. Als Anfangsbereich kann hierbei der Bereich angesehen werden, in den ein Absauger von außerhalb anschließt, so dass beispielsweise mittels Ableitungen der Teil der Sichtluft und die Sichterleichtfraktion abgesaugt werden können. Der abgesaugte Teil der Sichtluft und die Sichterleichtfraktion können sich von dem Endbereich zu dem jeweiligen Anfangsbereich bewegen, wobei der Endbereich die Absaugvorrichtung luftdicht abschließt.

Die zwei Absaugvorrichtungen können konisch ausgeführt sein. Der Durchmesser kann in einem Anfangsbereich der Absaugvorrichtungen größer sein als der Durchmesser in einem Endbereich der Absaugvorrichtungen. Als Anfangsbereich ist hierbei der Bereich anzusehen, in den Absauger von außerhalb anschließen, so dass beispielsweise mittels Ableitungen der Teil der Sichtluft und die Sichterleichtfraktion abgesaugt werden kann. Der abgesaugte Teil der Sichtluft und die Sichterleichtfraktion können sich von dem Endbereich zu dem jeweiligen Anfangsbereich bewegen, wobei der Endbereich die Absaugvorrichtung luftdicht abschließt.

Der Zick-Zack-Sichter kann weiter eine Trenngutzuführvorrichtung umfassen, die dazu ausgelegt ist, Trenngut von oberhalb der zwei Sichterkanäle dem Zick-Zack-Sichter zuzuführen, wobei die Trenngutzuführvorrichtung vorzugsweise als Zellenradschleuse ausgeführt ist. Vorzugsweise ist die Trenngutzuführung so ausgelegt, dass das Trenngut gleichmäßig, z.B. gleicher Mengenanteil, gleiche Zufördergeschwindigkeit, in die beiden Sichterkanäle eingebracht werden kann.

Da die Länge des Zick-Zack-Sichters zudem nicht größer gewählt werden braucht, kann für die Zuführung des Trennguts eine Zellenradschleuse ohne Probleme verwendet werden. Die Zellenradschleuse ermöglicht ein luftdichtes Abdichten des Zuführbereichs des Trennguts in dem Zick-Zack-Sichter, so dass ein Austreten von Sichtluft aus dem Zick-Zack-Sichter und ein Ansaugen von Umgebungsluft über den Zuführbereich verhindert werden kann.

Der Zick-Zack-Sichter kann weiter einen Trichter umfassen, der dazu ausgelegt ist, eine Sichterschwerfraktion aus dem Zick-Zack-Sichter auszubringen, wobei der Trichter vorzugsweise eine Zellenradschleuse umfasst. Die Sichterschwerfraktion kann sich unterhalb der beiden Sichterkanäle in dem Trichter sammeln und von dort kann die Sichterschwerfraktion einer Weiterverarbeitung zugeführt werden oder für eine weitere Separierung in den Zick-Zack-Sichter - oder eventuell in den Zick-Zack-Sichter mit veränderter Sichterkanalbreite und/oder veränderter Sichtluftzufuhr - zurückgeführt werden.

Zudem kann der Zick-Zack-Sichter ein einstellbares Verteilblech umfassen, das an dem zick-zack-förmigen Trennblech verschiebbar angeordnet ist. Vorzugsweise ist das Verteilblech verschiebbar in oberen Bereich des zick-zack-förmigen Trennblechs angeordnet, wobei das Verteilblech entlang der Oberfläche des oberen Bereichs des Trennblechs und parallel zu der Ausrichtung der Seitenkante des oberen Bereichs des Trennblechs nach oben und unten verschoben werden kann. So ist es möglich, den Eintrittsbereich in die beiden Sichterkanäle zu verändern, wodurch eine gleichmäßige Verteilung des Trennguts, das beispielsweise durch eine Trenngutzuführvorrichtung zugeführt wird, in die beiden Sichterkanäle zu erreichen.

Weiter umfasst die Erfindung ein Verfahren zum Separieren von Trenngut, beispielsweise Kunststoffflocken, unter Verwendung eines Zick-Zack-Sichters wie oben und/oder weiter unten beschrieben.

### Kurze Figurenbeschreibung

Weitere Vorteile und Ausführungsformen ergeben sich aus den beigefügten Zeichnungen. Beispielhaft werden in den Zeichnungen Flaschen als Behälter verwendet. In den Zeichnungen zeigt:
- Figur 1: eine schematische Ansicht eines Zick-Zack-Sichters zum Separieren von Ku nststoffflocken;
- Figur 2: einen Querschnitt durch den Zick-Zack-Sichter der Figur 1; und
- Figur 3: eine Definition für Maßangaben des Zick-Zack-Sichters.

### Ausführliche Figurenbeschreibung

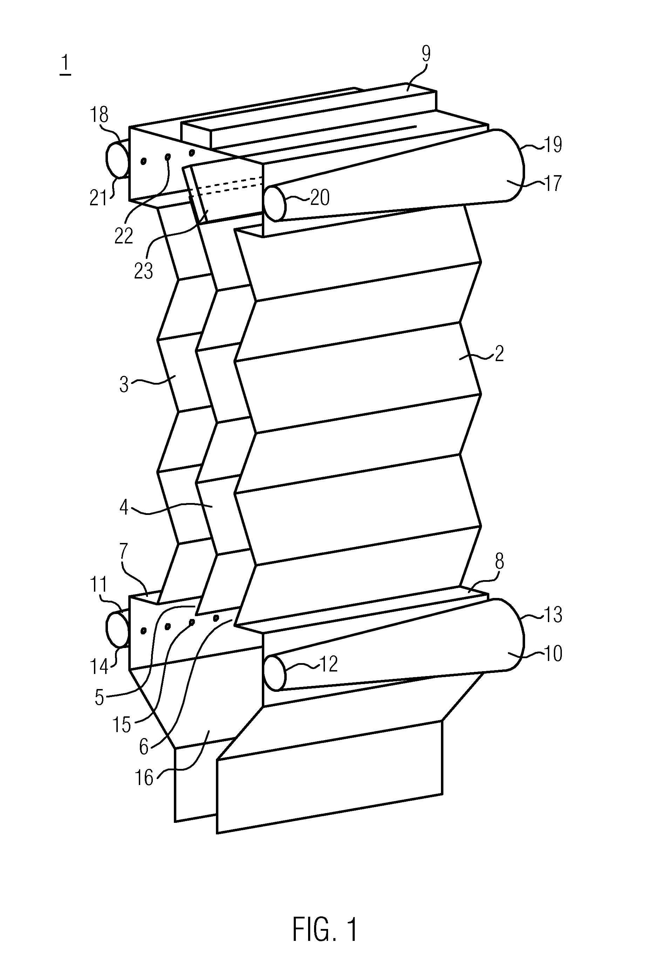

Figur 1 zeigt eine schematische Ansicht eines Zick-Zack-Sichters 1 zum Separieren von Kunststofflocken.

Der Zick-Zack-Sichter 1 umfasst zwei zick-zack-förmige Bleche 2, 3, die derart einander gegenüberliegend vertikal angeordnet sind, dass ein Kanal ausgebildet wird, der durch ein derart mittig zwischen den beiden zick-zack-förmigen Blechen 2, 3 vertikal angeordnetes zick-zack-förmiges Trennblech 4 in zwei parallele Sichterkanäle 5, 6 gleicher Breite unterteilt wird.

Die beiden zick-zack-förmigen Bleche 2, 3 können mittels Verfahrvorrichtungen 7, 8 horizontal verfahren werden, so dass die Breite der beiden parallelen Sichterkanäle 5, 6 veränderbar ist. Die Verfahrvorrichtung 7, 8 kann mittels einer Steuervorrichtung (nicht dargestellt), die beispielsweise die Art des Trennguts, die Sichtluftzufuhr und/oder die gewünschte Trennschärfe und/oder dergleichen berücksichtigt, gesteuert werden.

Das Trenngut wird oberhalb der Sichterkanäle mittels einer Trenngutzuführvorrichtung 9 zugeführt, beispielsweise mittels einer Zellenradschleuse. Eine Zellenradschleuse ermöglicht ein luftdichtes Abdichten des Zuführbereichs des Trennguts in dem Zick-Zack-Sichter 1, so dass ein Austreten von Sichtluft aus dem Zick-Zack-Sichter 1 und ein Ansaugen von Umgebungsluft über den Zuführbereich verhindert werden kann.

Um das Trenngut gleichmäßig in die beiden Sichterkanäle 5, 6 zu verteilen, ist ein Verteilblech 23 vorgesehen, das verschiebbar in oberen Bereich des Trennblechs 4 angeordnet ist. Das Verteilblech 23 kann entlang der Oberfläche des oberen Bereichs des Trennblechs 4 und parallel zu der Ausrichtung der Seitenkante des oberen Bereichs des Trennblechs 4 nach oben und unten verschoben werden. So ist es möglich, den Eintrittsbereich in die beiden Sichterkanäle 5, 6 zu verändern, wodurch eine gleichmäßige Verteilung des Trennguts, das durch die Trenngutzuführvorrichtung 9 zugeführt wird, in die beiden Sichterkanäle 5, 6 zu erreichen.

Das Trenngut wird in den beiden Sichterkanälen 5, 6 mittels der von unten in die Kanäle zugeführten Sichtluft und mittels der auf das Trenngut wirkenden Schwerkraft in eine Sichterleichtfraktion und eine Sichterschwerfraktion separiert.

Die Zuführvorrichtungen 10, 11 für die Sichtluft sind jeweils konisch ausgeführt, verlaufen entlang der Länge des Zick-Zack-Sichters 1 und sind seitlich versetzt unterhalb der beiden Sichterkanäle 5, 6 angeordnet. Der Durchmesser ist in einem Anfangsbereich 13 der Zuführvorrichtung 10, 11 größer ist als der Durchmesser in einem Endbereich 12, 14 der Zuführvorrichtung 10,11. Als Anfangsbereich 13 ist hierbei der Bereich anzusehen, in den die Sichtluft in die Zuführvorrichtungen von außerhalb, beispielsweise mittels Zuleitungen, eingebracht wird. Die eingebrachte Sichtluft bewegt sich von dem Anfangsbereich 13 zu dem jeweiligen Endbereich 12, 14 einer Zuführvorrichtung 10, 11, wobei der Endbereich 12, 14 die Zuführvorrichtung 12, 14 luftdicht abschließt. Die in die Zuführvorrichtungen 12, 14 eingebrachte Sichtluft wird mittels Perforationen 15 in den Zuführvorrichtungen 10, 11, die entlang der Länge des Zick-Zack-Sichters 1 angeordnet sind, in den Zick-Zack-Sichter 1 eingebracht und durchströmt dann die beiden Sichterkanäle 5, 6 von unten nach oben. Mittels der konischen Ausführung der Zuführvorrichtungen 10, 11 wird eine gleichmäßige Sichtluftströmung über die gesamte Länge des Zick-Zack-Sichters 1 erzeugt und somit ergibt sich auch eine gleichmäßige Verteilung der Sichtluft über die Länge wie auch die Breite der Sichterkanäle 5, 6. Um den Sichtluftdurchsatz in den beiden Sichterkanälen 5, 6 gleichmäßig zu variieren, braucht somit nur die Sichtluftzufuhr - beispielsweise der Durchsatz - im Anfangsbereich 13 der Zuführvorrichtung 10, 11 geändert zu werden.

Die Sichtluft durchströmt die beiden Sichterkanäle 5, 6 von unten nach oben, wobei das von oberhalb der beiden Sichterkanäle 5, 6 eingegebene Trenngut von der Sichtluft durchströmt wird. Infolge der mehrfachen Abwinkelung durch die zick-zack-förmigen Bleche und das zick-zack-förmige Trennblech wird das Trenngut in eine zick-zack-förmige Bewegung innerhalb der Sichterkanäle 5, 6 gezwungen. An jedem Knick der Sichterkanäle 5, 6 muss das Trenngut den Sichtluftstrom durchqueren und prallt danach auf die gegenüberliegende Sichterwand auf. Bei dem Wechsel von einer Sichterkanalwandseite auf die andere werden die Bestandteile des Trennguts von der Sichtluft angeströmt und unterschiedlich stark abgelenkt. Dabei sinken schwerere Bestandteile - die sogenannte Sichterschwerfraktion - in Folge der Schwerkraft in den Sichterkanälen 5, 6 nach unten. Die leichteren Bestandteile - die sogenannte Sichterleichtfraktion - werden mittels des nach oben gerichteten Sichtluftstroms nach oben getragen.

Die Absaugvorrichtungen 17, 18 für die Sichterleichtfraktion, wobei mittels der Absaugvorrichtungen 17, 18 ein Teil der Sichtluft und die Sichterleichtfraktion abgesaugt werden, sind jeweils konisch ausgeführt. Hierbei verlaufen die Absaugvorrichtungen 17, 18 entlang der Länge des Zick-Zack-Sichters 1 und sind seitlich versetzt oberhalb der beiden Sichterkanäle 5, 6 angeordnet. Der Durchmesser ist in einem Anfangsbereich 19 der Absaugvorrichtungen 17, 18 größer ist als der Durchmesser in einem Endbereich 20, 21 der Absaugvorrichtung 17, 18. Als Anfangsbereich 19 ist hierbei der Bereich anzusehen, in den Absauger von außerhalb anschließen, so dass beispielsweise mittels Ableitungen der Teil der Sichtluft und die Sichterleichtfraktion abgesaugt werden. Der abgesaugte Teil der Sichtluft und die Sichterleichtfraktion bewegen sich von dem Endbereich 20, 21 zu dem jeweiligen Anfangsbereich 19 der Absaugvorrichtung 17, 18, wobei der Endbereich 20, 21 die Absaugvorrichtung 17, 18 luftdicht abschließt. Das Absaugen des Teils der Sichtluft und der Sichterleichtfraktion erfolgen mittels Perforationen 22 in den Absaugvorrichtungen 17, 18, die entlang der Länge des Zick-Zack-Sichters 1 angeordnet sind.

Die beiden Sichterkanäle 5,6 enden in einem gemeinsamen Raum und die Sichterschwerfraktion wird mittels eines Trichters 16 unterhalb der beiden Sichterkanäle 5, 6 gesammelt und kann, beispielsweise mittels einer Zellenradschleuse, ausgebracht werden. Die Sichterschwerfraktion kann dann einer Weiterverarbeitung zugeführt werden oder für eine weitere Separierung in den Zick-Zack-Sichter 1 - eventuell mit anderer Sichterkanalbreite, anderer Sichtluftzufuhr - zurückgeführt werden.

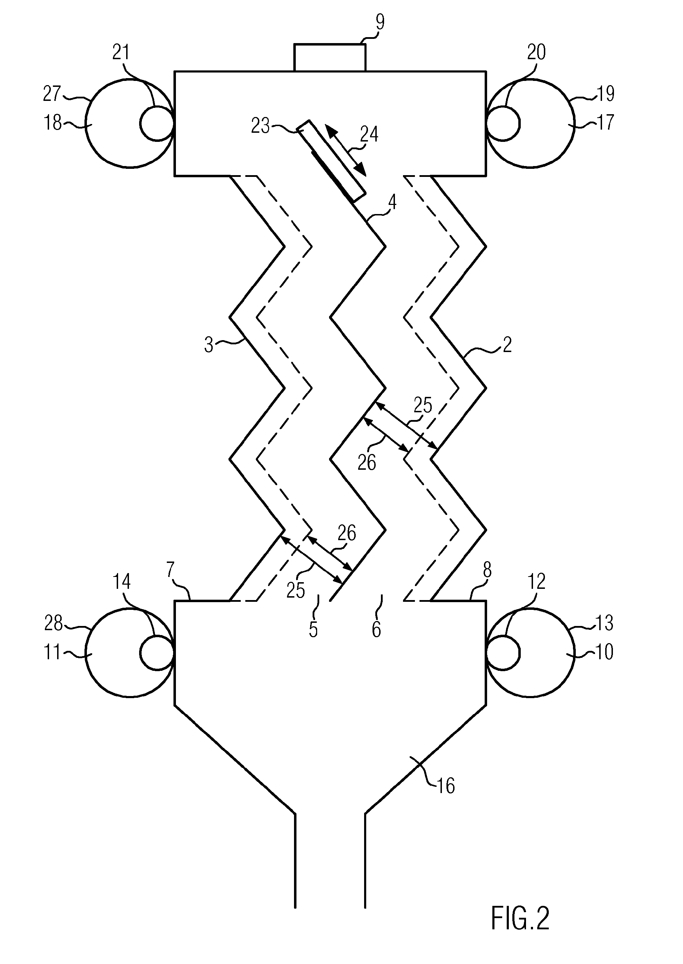

Figur 2 zeigt einen Querschnitt durch den Zick-Zack-Sichter der in Figur 1 dargestellt ist. In einer ersten Anordnung weisen die beiden Sichterkanäle 5, 6 eine erste Breite 25 auf. In einer zweiten Anordnung sind die beiden zick-zack-förmigen Bleche 2, 3 (gestrichelt dargestellt) mittels der Verfahrvorrichtung 7, 8 horizontal verschoben worden, so dass sich zwei Sichterkanäle 5, 6 mit einer zweiten, kleineren Breite 26 im Vergleich zu der ersten Anordnung ergeben. Das Verteilblech 23 kann in der dargestellten Richtung 24 entlang der Oberfläche des oberen Bereichs des Trennblechs 4 nach oben und unten verschoben werden.

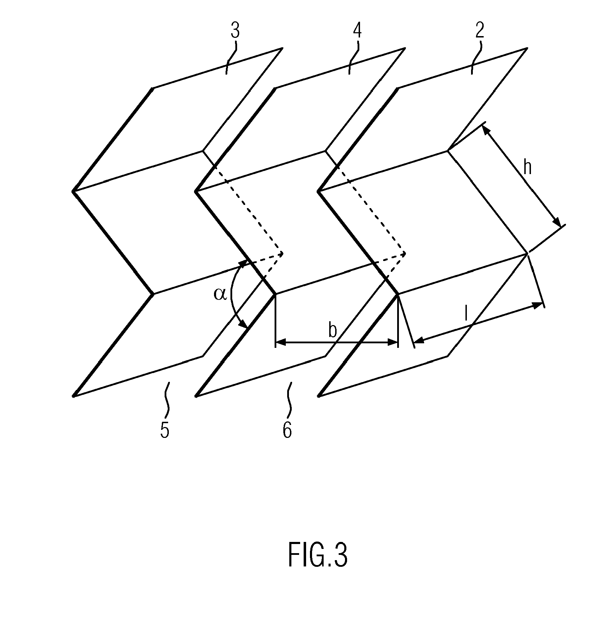

Figur 3 zeigt eine schematische Ansicht der beiden zick-zack-förmigen Bleche 2, 3 und des zick-zack-förmigen Trennbleches 4 eines Zick-Zack-Sichters 1 anhand der der Winkel α der Zacken des Zick-Zack-Sichters 1, die Breite b eines Sichterkanals 5, 6, die Tiefe I des Sichtkanals und die Höhe h eines Zackens erklärt werden. Die Breite b eines Sichterkanals 5, 6 ist durch den Abstand eines der zick-zack-förmigen Bleche 2, 3 zu dem zick-zack-förmigen Trennbleche 4 gegeben.

## Patentansprüche

1. Zick-Zack-Sichter (1) zum Separieren von Trenngut, beispielsweise von Kunststoffflocken, wobei der Zick-Zack-Sichter (1) umfasst:
- zwei zick-zack-förmige Bleche (2, 3), die derart einander gegenüberliegend vertikal angeordnet sind, dass zwischen ihnen ein Kanal ausgebildet ist
**dadurch gekennzeichnet, dass**
ein mittig zwischen den beiden zick-zack-förmigen Blechen (2, 3) vertikal angeordnetes zick-zack-förmiges Trennblech (4) derart angeordnet ist, dass der Kanal in zwei parallele Sichterkanäle (5, 6) mit im Wesentlichen gleicher Breite (25, 26) unterteilt wird.

2. Der Zick-Zack-Sichter (1) nach Anspruch 1, wobei der Zick-Zack-Sichter (1) weiter eine Verfahrvorrichtung (7, 8) umfasst, die dazu ausgelegt ist die beiden zick-zack-förmigen Bleche (2, 3) horizontal zu verfahren, so dass die Breite (25, 26) der zwei parallelen Kanäle veränderbar ist.

3. Der Zick-Zack-Sichter (1) nach Anspruch 2, wobei die Verfahrvorrichtung (7, 8) mittels einer Steuervorrichtung steuerbar ausgelegt ist, wobei die Steuerung vorzugsweise eine Art des Trennguts, eine Sichtluftzufuhr und/oder eine gewünschte Trennschärfe für eine Steuerung der Verfahrvorrichtung (7, 8) berücksichtigt.

4. Der Zick-Zack-Sichter (1) nach einem der Ansprüche 1 bis 3, wobei der Zick-Zack-Sichter (1) zwei Zuführvorrichtungen (10, 11) umfasst, die dazu ausgelegt sind, dem Zick-Zack-Sichter Sichtluft zuzuführen, wobei die zwei Zuführvorrichtungen (10, 11) jeweils entlang der Länge des Zick-Zack-Sichters (1) und seitlich versetzt unterhalb jeweils einem der beiden Sichterkanäle (5, 6) angeordnet sind.

5. Der Zick-Zack-Sichter (1) nach Anspruch 4, wobei die zwei Zuführvorrichtungen (10, 11) jeweils einen sich verjüngenden Querschnitt entlang der Länge des Zick-Zack-Sichters (1) aufweisen.

6. Der Zick-Zack-Sichter (1) nach Anspruch 4 oder 5, wobei die zwei Zuführvorrichtungen (10, 11) konisch ausgeführt sind.

7. Der Zick-Zack-Sichter (1) nach einem der Ansprüche 1 bis 6, wobei der Zick-Zack-Sichter (1) zwei Absaugvorrichtungen (17, 18) umfasst, die dazu ausgelegt sind, einen Teil Sichtluft und eine Leichteilfraktion aus dem Zick-Zack-Sichter (1) abzusaugen, wobei die zwei Absaugvorrichtungen (17, 18) jeweils entlang der Länge des Zick-Zack-Sichters (1) und seitlich versetzt oberhalb jeweils einem der beiden Sichterkanäle (5, 6) angeordnet sind.

8. Der Zick-Zack-Sichter (1) nach Anspruch 7, wobei die zwei Absaugvorrichtungen (17, 18) jeweils einen sich verjüngenden Querschnitt entlang der Länge des Zick-Zack-Sichters (1) aufweisen.

9. Der Zick-Zack-Sichter (1) nach Anspruch 7 oder 8, wobei die zwei Absaugvorrichtungen (17, 18) konisch ausgeführt sind.

10. Der Zick-Zack-Sichter (1) nach einem der Ansprüche 1 bis 9, wobei der Zick-Zack-Sichter (1) weiter eine Trenngutzuführvorrichtung (9) umfasst, die dazu ausgelegt ist, Trenngut von oberhalb der zwei Sichterkanäle (5, 6) dem Zick-Zack-Sichter (1) zu zuführen, wobei die Trenngutzuführvorrichtung (9) vorzugsweise als Zellenradschleuse ausgeführt ist.

11. Der Zick-Zack-Sichter (1) nach einem der Ansprüche 1 bis 10, wobei der Zick-Zack-Sichter (1) weiter einen Trichter (16) umfasst, der dazu ausgelegt ist, eine Sichterschwerfraktion aus dem Zick-Zack-Sichter (1) auszubringen, wobei der Trichter vorzugsweise eine Zellenradschleuse umfasst.

12. Der Zick-Zack-Sichter (1) nach einem der Ansprüche 1 bis 11, wobei der Zick-Zack-Sichter (1) weiter ein einstellbares Verteilblech (23) umfasst, das an dem zick-zack-förmigen Trennblech (4) verschiebbar angeordnet ist.

13. Verfahren zum Separieren von Trenngut, beispielsweise Kunststoffflocken, unter Verwendung eines Zick-Zack-Sichters (1) nach einem der Ansprüche 1 bis 12.
